# EUROPEAN PATENT APPLICATION

(11) **EP 4 317 241 A1**
(43) Date of publication of application: **07.02.2024**
(21) Application number: 22780620.5
(22) Date of filing: 25.03.2022
(51) Int. Cl.: C08G 61/08

(54) **RANDOM COPOLYMER AND METHOD FOR MANUFACTURING SAME**

(30) Priority: 31.03.2021 JP 2021062076
(71) Applicant: Zeon Corporation, Tokyo 100-8246 (JP)
(72) Inventor: HAYANO, Shigetaka, Tokyo 100-8246 (JP)
(74) Representative: Maiwald GmbH
(86) International application number: PCT/JP2022/014608
(87) International publication number: WO 2022/210407

(57) **Abstract**

A random copolymer includes a repeating unit represented by the following formula (I) and a repeating unit represented by the following formula (II). In formula (I), R¹ to R⁴ each represent, independently of one another, a hydrogen atom, a halogen atom, or an organic group (however, a case in which any one of R¹ to R⁴ is a phenyl group and the rest of R¹ to R⁴ are hydrogen atoms is excluded). In formula (II), R⁵ to R⁸ each represent, independently of one another, a hydrogen atom, a hydrocarbon group having a carbon number of 1 to 20, or a group including one or more atoms selected from the group consisting of a halogen atom, a silicon atom, an oxygen atom, and a nitrogen atom, R⁵ to R⁸ may be bonded to one another to form a ring, and m is an integer of 0 to 2.

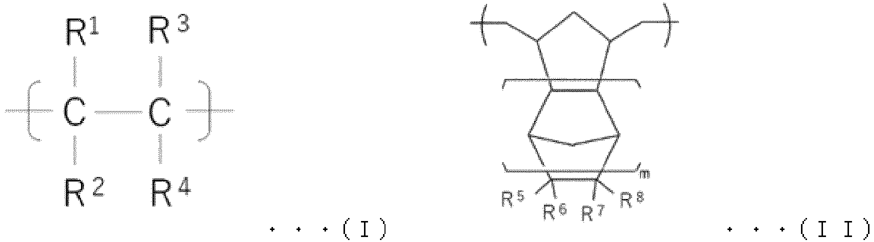

## Description

### TECHNICAL FIELD

The present disclosure relates to a random copolymer and a method of producing a random copolymer.

### BACKGROUND

Hydrogenated metathesis copolymers that are obtained by metathesis copolymerizing a monomer composition containing an alkyne such as phenylacetylene and a cycloolefin such as dicyclopentadiene in the presence of tungsten hexachloride and then hydrogenating carbon-carbon double bonds in a main chain of the resultant metathesis copolymer are known as random copolymers that are suitable for optical materials (for example, refer to Patent Literature (PTL) 1).

### CITATION LIST

### Patent Literature

PTL 1: JP2006-183001A

### SUMMARY

### (Technical Problem)

With regards to resin films that are used as materials such as packaging materials, there has been demand, in recent years, for resin films having excellent performance in terms of water vapor barrier performance, oxygen barrier performance, oil resistance, close adherence to a film made of polyvinyl alcohol (hereinafter, also abbreviated as "PVOH film"), and so forth.

However, it has not been possible to simultaneously achieve high levels of performance in terms of all of water vapor barrier performance, oxygen barrier performance, oil resistance, and close adherence to a PVOH film with a conventional copolymer such as the hydrogenated metathesis copolymer described above.

Accordingly, an object of the present disclosure is to provide a copolymer that is capable of forming a film having high water vapor barrier performance, oxygen barrier performance, oil resistance, and close adherence to a PVOH film.

### (Solution to Problem)

The inventor conducted diligent investigation with the aim of solving the problem set forth above. The inventor discovered that in the case of a random copolymer that is obtained through hydrogenation of a ring-opened polymer obtained by ring-opening polymerizing a monomer composition containing specific monomers in the presence of a catalyst with a specific ether compound as a polymerization initiator, this random copolymer can display high water vapor barrier performance, high oxygen barrier performance, high oil resistance, and high close adherence to a PVOH film, and, in this manner, the inventor completed the present disclosure.

Note that the term "ring-opening polymerization" as used in the present disclosure refers to a polymerization reaction that proceeds in accompaniment to ring opening of at least one type of monomer. Accordingly, the term "ring-opening polymerization" as used in the present disclosure is also inclusive of subsequently described concurrent vinyl-addition and ring-opening copolymerization in which a compound represented by formula (IV) undergoes ring opening while also being polymerized with a compound represented by formula (III), for example.

Specifically, the present disclosure aims to advantageously solve the problem set forth above, and a presently disclosed random copolymer comprises: a repeating unit represented by formula (I), shown below, 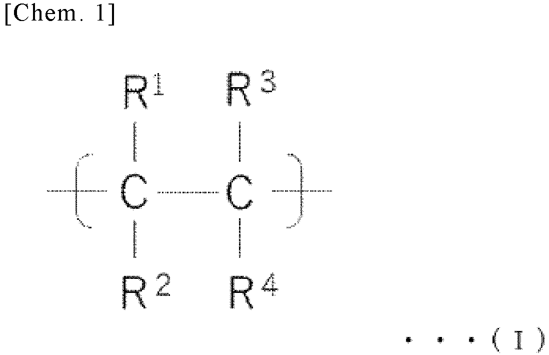 where, in formula (I), R¹ to R⁴ each represent, independently of one another, a hydrogen atom, a halogen atom, or an organic group with a proviso that a case in which any one of R¹ to R⁴ is a phenyl group and the rest of R¹ to R⁴ are hydrogen atoms is excluded; and a repeating unit represented by formula (II), shown below, 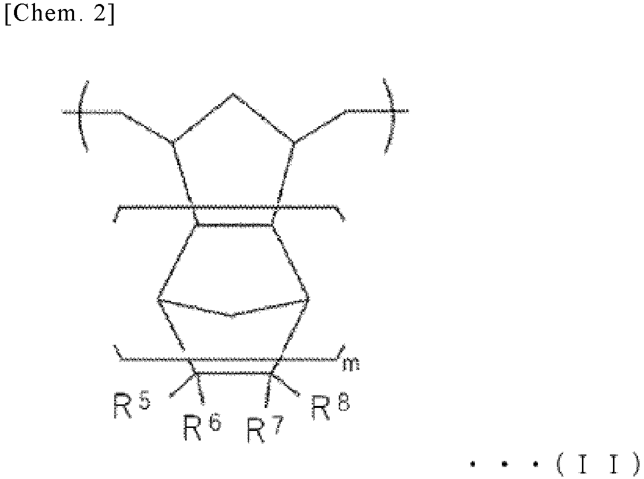 where, in formula (II), R⁵ to R⁸ each represent, independently of one another, a hydrogen atom, a hydrocarbon group having a carbon number of not less than 1 and not more than 20, or a group including one or more atoms selected from the group consisting of a halogen atom, a silicon atom, an oxygen atom, and a nitrogen atom, R⁵ to R⁸ may be bonded to one another to form a ring, and m is an integer of 0 to 2. By using a random copolymer that has the structure set forth above, it is possible to form a film having high water vapor barrier performance, oxygen barrier performance, oil resistance, and close adherence to a PVOH film.

In the presently disclosed random copolymer, it is preferable that R¹ and R² are hydrogen atoms, R³ is a hydrogen atom or a methyl group, and R⁴ is a group having a carbon number of not less than 1 and not more than 12 that may include one or more atoms selected from the group consisting of a halogen atom, an oxygen atom, and a nitrogen atom. In particular, it is more preferable that R⁴ is a group having a carbon number of not less than 1 and not more than 12 that includes either or both of an oxygen atom and a nitrogen atom, and even more preferable that R⁴ is a group having a carbon number of not less than 1 and not more than 12 that includes a carbonyl group or a nitrile group. When R¹ to R⁴ in the repeating unit represented by formula (I) are the atoms or groups set forth above, oil resistance and close adherence to a PVOH film can be further increased.

In the presently disclosed random copolymer, it is preferable that R⁵ to R⁸ are each, independently of one another, a hydrogen atom or a hydrocarbon group having a carbon number of not less than 1 and not more than 20. When R⁵ to R⁸ in the repeating unit represented by formula (II) are the atoms or groups set forth above, water vapor barrier performance and oxygen barrier performance can be further increased.

Moreover, the present disclosure aims to advantageously solve the problem set forth above, and a presently disclosed method of producing a random copolymer comprises: (A) ring-opening polymerizing a monomer composition containing a compound represented by formula (III), shown below, 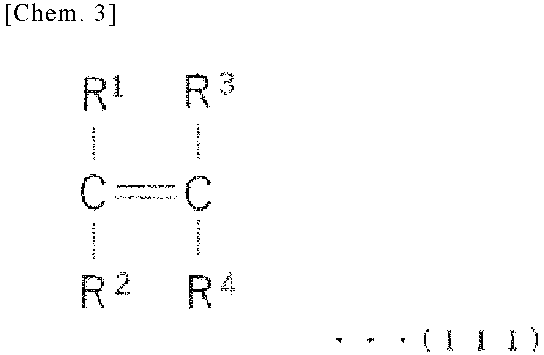 where, in formula (III), R¹ to R⁴ each represent, independently of one another, a hydrogen atom, a halogen atom, or an organic group with a proviso that a case in which any one of R¹ to R⁴ is a phenyl group and the rest of R¹ to R⁴ are hydrogen atoms is excluded, and a compound represented by formula (IV), shown below, 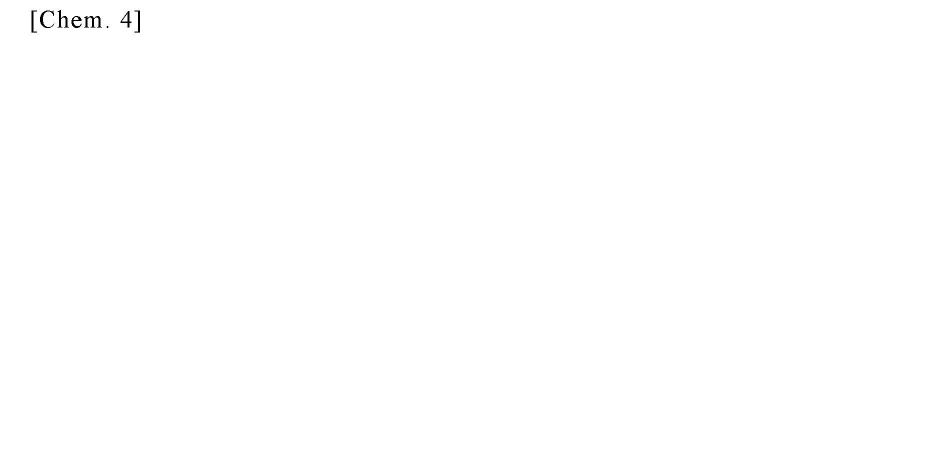 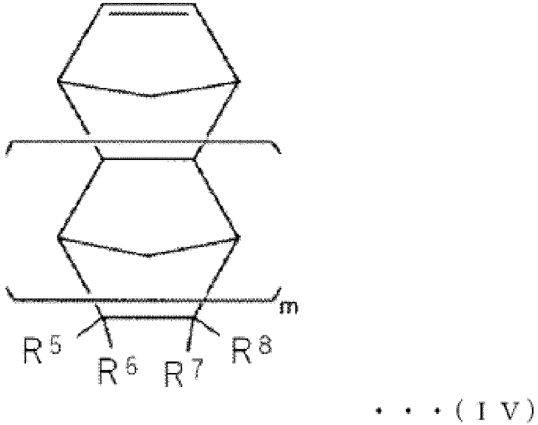 where, in formula (IV), R⁵ to R⁸ each represent, independently of one another, a hydrogen atom, a hydrocarbon group having a carbon number of not less than 1 and not more than 20, or a group including one or more atoms selected from the group consisting of a halogen atom, a silicon atom, an oxygen atom, and a nitrogen atom, R⁵ to R⁸ may be bonded to one another to form a ring, and m is an integer of 0 to 2, in the presence of a catalyst and an ether compound represented by formula (V), shown below, 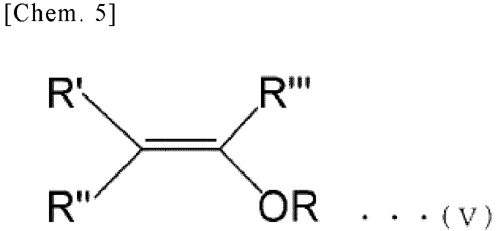 where, in formula (V), R to R‴ each represent, independently of one another, a group having a carbon number of not less than 1 and not more than 12 that may include one or more atoms selected from the group consisting of a halogen atom, a silicon atom, an oxygen atom, and a nitrogen atom and R to R‴ may be bonded to one another to form a ring; and (B) hydrogenating a polymer that is obtained by the (A) ring-opening polymerizing. By hydrogenating a polymer that is obtained through ring-opening polymerization of a monomer composition containing the compound represented by formula (III) (excluding styrene) and the compound represented by formula (IV), performed in the presence of the ether compound set forth above and a catalyst, a random copolymer that is capable of forming a film having high water vapor barrier performance, oxygen barrier performance, oil resistance, and close adherence to a PVOH film is obtained.

In the presently disclosed method of producing a random copolymer, it is preferable that the ether compound includes two or more ether bonds in a molecule. By using an ether compound that has two or more ether bonds in a molecule, a random copolymer that is capable of forming a film having high water vapor barrier performance, oxygen barrier performance, oil resistance, and close adherence to a PVOH film is efficiently obtained.

In the presently disclosed method of producing a random copolymer, it is preferable that the ether compound is 1-cyclohexenyl-2-methoxyethene, ethyl-1-propenyl ether, 3,4-dihydropyran, 2-vinyloxytetrahydropyran, 3-ethoxyacrylonitrile, 3,4-dihydro-2-methoxy-2H-pyran, or 3,4-dihydro-2-ethoxy-2H-pyran. By using any of these ether compounds, a random copolymer that is capable of forming a film having high water vapor barrier performance, oxygen barrier performance, oil resistance, and close adherence to a PVOH film is efficiently obtained.

In the presently disclosed method of producing a random copolymer, it is preferable that R¹ and R² are hydrogen atoms, R³ is a hydrogen atom or a methyl group, and R⁴ is a group having a carbon number of not less than 1 and not more than 12 that may include one or more atoms selected from the group consisting of a halogen atom, an oxygen atom, and a nitrogen atom. In particular, it is more preferable that R⁴ is a group having a carbon number of not less than 1 and not more than 12 that includes either or both of an oxygen atom and a nitrogen atom, and even more preferable that R⁴ is a group having a carbon number of not less than 1 and not more than 12 that includes a carbonyl group or a nitrile group. When R¹ to R⁴ in the compound represented by formula (III) are the atoms or groups set forth above, a random copolymer having further increased water vapor barrier performance, oxygen barrier performance, oil resistance, and close adherence to a PVOH film can be obtained.

In the presently disclosed method of producing a random copolymer, it is preferable that R⁵ to R⁸ are each, independently of one another, a hydrogen atom or a hydrocarbon group having a carbon number of not less than 1 and not more than 20. When R⁵ to R⁸ in the compound represented by formula (IV) are the atoms or groups set forth above, a random copolymer having further increased water vapor barrier performance, oxygen barrier performance, oil resistance, and close adherence to a PVOH film can be obtained.

### (Advantageous Effect)

According to the present disclosure, it is possible to provide a random copolymer that is capable of forming a film having high water vapor barrier performance, oxygen barrier performance, oil resistance, and close adherence to a PVOH film.

### DETAILED DESCRIPTION

The following provides a detailed description of embodiments of the present disclosure.

The presently disclosed random copolymer can be used in various fields as a resin material forming various shaped products such as packaging materials, for example, without any specific limitations. Moreover, the presently disclosed random copolymer can be efficiently produced using the presently disclosed method of producing a random copolymer, for example.

### (Random copolymer)

The presently disclosed random copolymer includes a repeating unit represented by the following formula (I) and a repeating unit represented by the following formula (II), and optionally further includes other repeating units. A random copolymer having such a structure can display high water vapor barrier performance, high oxygen barrier performance, high oil resistance, and high close adherence to a PVOH film when formed into a film.

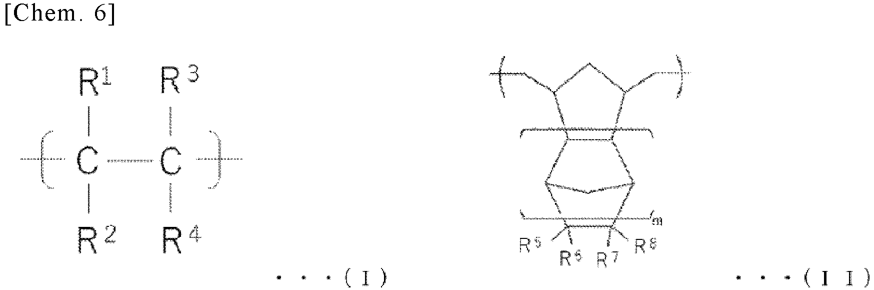

### <Repeating unit represented by formula (I)>

In formula (I), R¹ to R⁴ each represent, independently of one another, a hydrogen atom, a halogen atom, or an organic group. However, the repeating unit represented by formula (I) is not a repeating unit in which any one of R¹ to R⁴ is a phenyl group and the rest of R¹ to R⁴ are hydrogen atoms.

The halogen atom may be a fluorine atom, a chlorine atom, a bromine atom, an iodine atom, or the like.

The organic group may be an organic group having a carbon number of not less than 1 and not more than 12, for example, but is not specifically limited thereto.

The organic group having a carbon number of not less than 1 and not more than 12 may be a hydrocarbon group or may include one or more atoms other than carbon and hydrogen atoms. The atom other than a carbon atom or a hydrogen atom may be a halogen atom (fluorine atom, chlorine atom, bromine atom, iodine atom, etc.), an oxygen atom, a nitrogen atom, or the like, for example. One of these types of atoms can be included in the organic group individually, or two or more of these types of atoms can be included in the organic group.

Examples of hydrocarbon groups having a carbon number of not less than 1 and not more than 12 include alkyl groups such as a methyl group, an ethyl group, an n-propyl group, an isopropyl group, an n-butyl group, an isobutyl group, a sec-butyl group, a t-butyl group, an n-pentyl group, an isopentyl group, a neo-pentyl group, an n-hexyl group, and an isohexyl group; and aryl groups such as a tolyl group, a xylyl group, and a naphthyl group.

Examples of groups having a carbon number of not less than 1 and not more than 12 that include a halogen atom include haloalkyl groups such as a fluoromethyl group, a fluoroethyl group, a chloromethyl group, and a chloroethyl group.

Examples of groups having a carbon number of not less than 1 and not more than 12 that include an oxygen atom include groups that include a carbonyl group, groups that include a hydroxyl group, and groups that include an alkoxy group.

The group having a carbon number of not less than 1 and not more than 12 that includes a carbonyl group may be a carboxy group; an acyl group such as a formyl group, an acetyl group, a propionyl group, a butyryl group, a valeryl group (pentanoyl group), a hexanoyl group, an octanoyl group, a decanoyl group, or a benzoyl group; an acyloxy group such as an acetyloxy group, a propionyloxy group, a butyryloxy group, an isobutyryloxy group, a valeryloxy group (pentanoyloxy group), a hexanoyloxy group, an octanoyloxy group, a decanoyloxy group, or a benzoyloxy group; an alkoxycarbonyl group such as a methoxycarbonyl group, an ethoxycarbonyl group, a propoxycarbonyl group, an isopropoxycarbonyl group, a butoxycarbonyl group, an isobutoxycarbonyl group, a t-butoxycarbonyl group, or a pentyloxycarbonyl group; a substituted alkoxycarbonyl group such as a methoxyethoxycarbonyl group, a phenoxyethoxycarbonyl group, a methoxybutoxycarbonyl group, a hydroxyethoxycarbonyl group, a hydroxypropoxycarbonyl group, a methoxyethoxyethoxycarbonyl group, an ethoxyethoxyethoxycarbonyl group, a phenoxyethoxyethoxycarbonyl group, a methoxyethoxyethoxyethoxycarbonyl group, an ethoxyethoxyethoxyethoxycarbonyl group, a methoxyethoxyethoxyethoxyethoxycarbonyl group, an ethoxyethoxyethoxyethoxyethoxycarbonyl group, a glycidyloxycarbonyl group, a phenoxycarbonyl group, a chlorophenoxycarbonyl group, a bromophenoxycarbonyl group, a benzyloxycarbonyl group, a chlorobenzyloxycarbonyl group, a bromobenzyloxycarbonyl group, a chloroethoxycarbonyl group, or a bromoethoxycarbonyl group; or the like.

The group having a carbon number of not less than 1 and not more than 12 that includes a hydroxyl group may be a hydroxyalkyl group such as a methylol group, an ethylol group, a propylol group, or a butylol group.

The group having a carbon number of not less than 1 and not more than 12 that includes an alkoxy group may be an alkoxy group such as a methoxy group, an ethoxy group, a propoxy group, or a butoxy group.

Examples of groups having a carbon number of not less than 1 and not more than 12 that include a nitrogen atom include a nitrile group and an amino group.

Examples of groups having a carbon number of not less than 1 and not more than 12 that include an oxygen atom and a nitrogen atom include an amide group, an N,N-dimethylamide group, and an N,N-diisopropylamide group.

Of the examples given above, a group having a carbon number of not less than 1 and not more than 12 that includes either or both of an oxygen atom and a nitrogen atom is preferable as the organic group having a carbon number of not less than 1 and not more than 12 from a viewpoint of further improving water vapor barrier performance, oxygen barrier performance, oil resistance, and close adherence to a PVOH film of a film formed using the random copolymer, and a group having a carbon number of not less than 1 and not more than 12 that includes a carbonyl group or a nitrile group is more preferable as the organic group having a carbon number of not less than 1 and not more than 12. More specifically, the organic group having a carbon number of not less than 1 and not more than 12 is preferably a carboxy group, a methoxycarbonyl group, an ethoxycarbonyl group, an isopropoxycarbonyl group, a butoxycarbonyl group, a methoxyethoxycarbonyl group, a phenoxyethoxycarbonyl group, a methoxybutoxycarbonyl group, a hydroxyethoxycarbonyl group, a hydroxypropoxycarbonyl group, a methoxyethoxyethoxycarbonyl group, an ethoxyethoxyethoxycarbonyl group, a phenoxyethoxyethoxycarbonyl group, a methoxyethoxyethoxyethoxycarbonyl group, an ethoxyethoxyethoxyethoxycarbonyl group, a methoxyethoxyethoxyethoxyethoxycarbonyl group, an ethoxyethoxyethoxyethoxyethoxycarbonyl group, a glycidyloxycarbonyl group, a phenoxycarbonyl group, a chlorophenoxycarbonyl group, a bromophenoxycarbonyl group, a benzyloxycarbonyl group, a chlorobenzyloxycarbonyl group, a bromobenzyloxycarbonyl group, a chloroethoxycarbonyl group, a bromoethoxycarbonyl group, a nitrile group, an N,N-dimethylamide group, or an N,N-diisopropylamide group, more preferably a carboxy group, a methoxycarbonyl group, an ethoxycarbonyl group, an isopropoxycarbonyl group, a butoxycarbonyl group, a methoxyethoxycarbonyl group, a phenoxyethoxycarbonyl group, a methoxybutoxycarbonyl group, a hydroxyethoxycarbonyl group, a hydroxypropoxycarbonyl group, a methoxyethoxyethoxycarbonyl group, an ethoxyethoxyethoxycarbonyl group, a phenoxyethoxyethoxycarbonyl group, a methoxyethoxyethoxyethoxycarbonyl group, an ethoxyethoxyethoxyethoxycarbonyl group, a methoxyethoxyethoxyethoxyethoxycarbonyl group, an ethoxyethoxyethoxyethoxyethoxycarbonyl group, a glycidyloxycarbonyl group, a phenoxycarbonyl group, a chlorophenoxycarbonyl group, a bromophenoxycarbonyl group, a benzyloxycarbonyl group, a chlorobenzyloxycarbonyl group, a bromobenzyloxycarbonyl group, a chloroethoxycarbonyl group, a bromoethoxycarbonyl group, or a nitrile group, and even more preferably a methoxycarbonyl group, a butoxycarbonyl group, or a nitrile group.

Moreover, from a viewpoint of further improving water vapor barrier performance, oxygen barrier performance, oil resistance, and close adherence to a PVOH film of a film formed using the random copolymer, the repeating unit represented by formula (I) is preferably a repeating unit in which R¹ and R² are hydrogen atoms, R³ is a hydrogen atom or a methyl group, and R⁴ is a group having a carbon number of not less than 1 and not more than 12 that may include one or more atoms selected from the group consisting of a halogen atom, an oxygen atom, and a nitrogen atom. In particular, from a viewpoint of imparting polarity and hydrophilicity to the random copolymer and further improving oil resistance and close adherence to a PVOH film, in a case in which R¹ and R² are hydrogen atoms and R³ is a hydrogen atom or a methyl group, R⁴ is preferably a group having a carbon number of not less than 1 and not more than 12 that includes either or both of an oxygen atom and a nitrogen atom, more preferably a group having a carbon number of not less than 1 and not more than 12 that includes a carbonyl group or a nitrile group, and even more preferably a methoxycarbonyl group, a butoxycarbonyl group, or a nitrile group.

The proportion constituted by repeating units represented by formula (I) among all repeating units in the presently disclosed random copolymer is not specifically limited but is preferably 5 mass% or more, more preferably 10 mass% or more, even more preferably 20 mass% or more, further preferably 25 mass% or more, and particularly preferably 30 mass% or more, and is preferably 95 mass% or less, more preferably 90 mass% or less, even more preferably 80 mass% or less, and particularly preferably 70 mass% or less.

### <Repeating unit represented by formula (II)>

In formula (II), R⁵ to R⁸ each represent, independently of one another, a hydrogen atom, a hydrocarbon group having a carbon number of not less than 1 and not more than 20, or a group including one or more atoms selected from the group consisting of a halogen atom, a silicon atom, an oxygen atom, and a nitrogen atom, and m is an integer of 0 to 2. Note that two or more of R⁵ to R⁸ may be bonded to one another to form a ring.

The hydrocarbon group having a carbon number of not less than 1 and not more than 20 may be an alkyl group having a carbon number of not less than 1 and not more than 20 such as a methyl group, an ethyl group, or a propyl group; an alkenyl group having a carbon number of not less than 2 and not more than 20 such as a vinyl group, a propenyl group, an isopropenyl group, or a crotyl group; an alkynyl group having a carbon number of not less than 2 and not more than 20 such as an ethynyl group or a propargyl group; an aromatic ring-containing hydrocarbon group having a carbon number of not less than 6 and not more than 20 such as a phenyl group, a benzyl group, or a naphthyl group; or the like.

The group including a halogen atom may be a halogen atom such as a fluorine atom or a chlorine atom; a haloalkyl group such as a trifluoromethyl group, a 2,2,2-trifluoroethyl group, or a pentafluoroethyl group; or the like.

The group including a silicon atom may be a silyl group such as a trimethylsilyl group, a triethylsilyl group, a t-butyldimethylsilyl group, or a triphenyl group; a silyl group-substituted alkyl group such as a trimethylsilylmethyl group or a 2-trimethylsilylethyl group; or the like.

The group including an oxygen atom may be an alkoxyl group such as a methoxy group, an ethoxy group, a propoxy group, or an isopropoxy group; an alkoxycarbonyl group such as a methoxycarbonyl group, an ethoxycarbonyl group, or a t-butoxycarbonyl group; or the like.

The group including a nitrogen atom may be an amino group; a monosubstituted amino group such as a methylamino group; a disubstituted amino group such as a dimethylamino group; an amide group; a monosubstituted amide group such as an N-methylamide group; a disubstituted amide group such as an N,N-dimethylamide group; or the like.

The ring formed through bonding of two or more of R⁵ to R⁸ may be a hydrocarbon ring or may be a heteroring that includes either or both of an oxygen atom and a nitrogen atom.

Of the examples given above, it is preferable that R⁵ to R⁸ are each a hydrogen atom or a hydrocarbon group having a carbon number of not less than 1 and not more than 20 from a viewpoint of further improving water vapor barrier performance, oxygen barrier performance, oil resistance, and close adherence to a PVOH film of a film formed using the random copolymer, and more preferable that R⁵ to R⁸ are all hydrogen atoms or that R⁵ and R⁸ are hydrogen atoms and that R⁶ and R⁷ are bonded to each other to form a hydrocarbon ring such as cyclopentane or cyclopentene.

Moreover, from a viewpoint of further improving water vapor barrier performance, oxygen barrier performance, oil resistance, and close adherence to a PVOH film of a film formed using the random copolymer, m is preferably 0 or 1.

The proportion constituted by repeating units represented by formula (II) among all repeating units in the presently disclosed random copolymer is not specifically limited but is preferably 5 mass% or more, more preferably 10 mass% or more, even more preferably 20 mass% or more, and particularly preferably 30 mass% or more, and is preferably 95 mass% or less, more preferably 90 mass% or less, even more preferably 80 mass% or less, further preferably 75 mass% or less, and particularly preferably 70 mass% or less.

### <Other repeating units>

Other repeating units that can optionally be included in the presently disclosed random copolymer can be repeating units with any structure without any specific limitations so long as they can form a copolymer with the repeating units described above.

Note that the proportion constituted by other repeating units among all repeating units in the presently disclosed random copolymer is not specifically limited but is preferably 10 mass% or less, more preferably 5 mass% or less, and even more preferably zero (i.e., other repeating units are not included).

### <Properties of random copolymer>

The weight-average molecular weight of the random copolymer is preferably 2,000 or more, more preferably 4,000 or more, even more preferably 5,000 or more, and particularly preferably 10,000 or more, and is preferably 1,000,000 or less, and more preferably 500,000 or less.

Note that the weight-average molecular weight of the random copolymer can be adjusted by altering the production method of the random copolymer.

### (Method of producing random copolymer)

The presently disclosed method of producing a random copolymer includes: (A) ring-opening polymerizing a monomer composition containing specific compounds in the presence of a specific ether compound and a catalyst (step (A)); and (B) hydrogenating a polymer (ring-opened polymer) obtained by the (A) ring-opening polymerizing (step (B)). Through the presently disclosed method of producing a random copolymer, it is possible to efficiently obtain the presently disclosed random copolymer set forth above.

### <Step (A)>

In step (A), the monomer composition is ring-opening polymerized in the presence of the ether compound and the catalyst to obtain a ring-opened polymer. The ring-opening polymerization may be performed in the absence of a solvent or may be performed in the presence of a solvent.

### [Monomer composition]

The monomer composition contains a compound represented by the following formula (III) and a compound represented by the following formula (IV), and can optionally further contain other compounds that are copolymerizable with the compound represented by formula (III) and the compound represented by formula (IV).

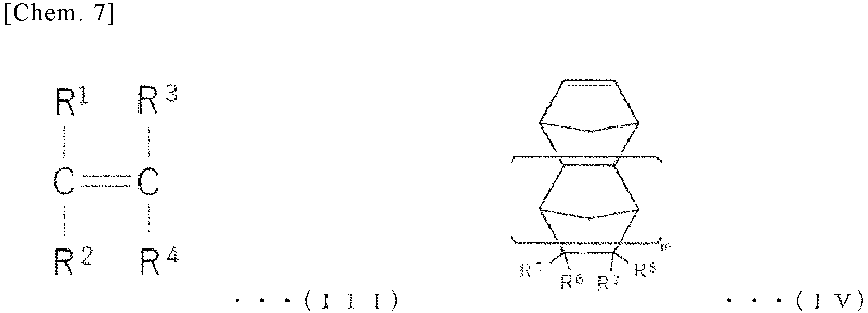

The compound represented by formula (III) forms the previously described repeating unit represented by formula (I) in a random copolymer that is obtained through step (A) and step (B). Moreover, the compound represented by formula (IV) forms the previously described repeating unit represented by formula (II) in a random copolymer that is obtained through step (A) and step (B).

R¹ to R⁴ in formula (III) and R⁵ to R⁸ in formula (IV) may be the same as any of the examples previously given for R¹ to R⁴ in formula (I) and R⁵ to R⁸ in formula (II).

In particular, from a viewpoint of improving oil resistance and close adherence to a PVOH film of a film formed using the obtained random copolymer, the compound represented by formula (III) is preferably an ethylenically unsaturated nitrile such as acrylonitrile or methacrylonitrile; a (meth)acrylic acid ester such as methyl (meth)acrylate, ethyl (meth)acrylate, isopropyl (meth)acrylate, butyl (meth)acrylate, 2-methoxyethyl (meth)acrylate, 2-phenoxyethyl (meth)acrylate, 3-methoxybutyl (meth)acrylate, 2-hydroxyethyl (meth)acrylate, 2-hydroxypropyl (meth)acrylate, methoxy diethylene glycol (meth)acrylate, ethoxy diethylene glycol (meth)acrylate, phenoxy diethylene glycol (meth)acrylate, methoxy triethylene glycol (meth)acrylate, ethoxy triethylene glycol (meth)acrylate, methoxy tetraethylene glycol (meth)acrylate, ethoxy tetraethylene glycol (meth)acrylate, glycidyl (meth)acrylate, phenyl (meth)acrylate, chlorophenyl (meth)acrylate, bromophenyl (meth)acrylate, benzyl (meth)acrylate, chlorobenzyl (meth)acrylate, bromobenzyl (meth)acrylate, chloroethyl (meth)acrylate, or bromoethyl (meth)acrylate; a (meth)acrylic acid such as acrylic acid or methacrylic acid; or an acrylamide such as acrylamide, N,N-dimethylacrylamide, or N,N-diisopropylacrylamide, more preferably a (meth)acrylic acid ester, a (meth)acrylic acid, or an ethylenically unsaturated nitrile, even more preferably a (meth)acrylic acid ester or an ethylenically unsaturated nitrile, and particularly preferably methyl methacrylate, butyl acrylate, or acrylonitrile. One of these compounds can be used individually, or two or more of these compounds can be used as a mixture.

Note that in the present disclosure, "(meth)acrylic acid" is used to indicate "acrylic acid" and/or "methacrylic acid".

The compound represented by formula (IV) may be a norbornene for which m is 0, a tetracyclododecene for which m is 1, or a hexacycloheptadecene for which m is 2. One of these compounds can be used individually, or two or more of these compounds can be used as a mixture.

Specific examples of norbornenes include norbornenes that are unsubstituted or include an alkyl group such as norbornene, 5-methylnorbornene, 5-ethylnorbornene, 5-cyclohexylnorbornene, and 5-cyclopentylnorbornene; norbornenes that include an alkenyl group such as 5-methylidenenorbornene, 5-ethylidenenorbornene, 5-vinylnorbornene, 5-cyclohexenylnorbornene, and 5-cyclopentenylnorbornene; norbornenes that include an aromatic ring such as 5-phenylnorbornene; norbornenes that include an oxygen atom-containing group such as 5-methoxycarbonylnorbornene, 5-ethoxycarbonylnorbornene, 5-methyl-5-methoxycarbonylnorbornene, norbornenyl-2-methylpropionate, norbornene-5,6-dicarboxylic acid anhydride, 5-hydroxymethylnorbornene, 5,6-di(hydroxymethyl)norbornene, 5,5-di(hydroxymethyl)norbornene, 5,6-dicarboxynorbornene, and 5-methoxycarbonyl-6-carboxynorbornene; norbornenes that include a nitrogen atom-containing group such as 5-cyanonorbornene and norbornene-5,6-dicarboxylic acid imide; compounds in which R⁶ and R⁷ are bonded to each other to form a five-membered ring such as dicyclopentadiene and tricyclo[4.3.1^{2,5}.0]dec-3-ene; and compounds in which R⁵ to R⁸ are bonded to one another to form an aromatic ring such as tetracyclo[6.5.1^{2,5}.0^{1,6}.0^{8,13}]trideca-3,8,10,12-tetraene (also referred to as 1,4-methano-1,4,4a,9a-tetrahydrofluorene) and tetracyclo[6.6.1^{2,5}.0^{1,6}.0^{8,13}]tetradeca-3,8,10,12-tetraene (also referred to as 1,4-methano-1,4,4a,5,10,10a-hexahydroanthracene).

Specific examples of tetracyclododecenes include tetracyclododecenes that are unsubstituted or include an alkyl group such as tetracyclododecene, 8-methyltetracyclododecene, and 8-cyclohexyltetracyclododecene; tetracyclododecenes that include an alkenyl group such as 8-methylidenetetracyclododecene, 8-ethylidenetetracyclododecene, 8-vinyltetracyclododecene, and 8-cyclohexenyltetracyclododecene; tetracyclododecenes that include an aromatic ring such as 8-phenyltetracyclododecene; tetracyclododecenes that include an oxygen atom-containing group such as 8-methoxycarbonyltetracyclododecene, 8-methyl-8-methoxycarbonyltetracyclododecene, 8-carboxytetracyclododecene, tetracyclododecene-8,9-dicarboxylic acid, and tetracyclododecene-8,9-dicarboxylic acid anhydride; tetracyclododecenes that include a nitrogen atom-containing group such as 8-cyanotetracyclododecene and tetracyclododecene-8,9-dicarboxylic acid imide; and tetracyclododecenes that include a halogen atom-containing group such as 8-chlorotetracyclododecene.

Any Diels-Alder adduct of cyclopentadiene with any of the tetracyclododecenes described above can be used as a hexacycloheptadecene.

Of the examples given above, the compound represented by formula (IV) is preferably a norbornene that is unsubstituted or includes an alkyl group, a compound in which R⁶ and R⁷ are bonded to each other to form a five-membered ring, or a tetracyclododecene that is unsubstituted or includes an alkyl group from a viewpoint of improving water vapor barrier performance and oxygen barrier performance of a film formed using the obtained random copolymer, and is more preferably norbornene, dicyclopentadiene, or tetracyclododecene.

The proportion constituted by the compound represented by formula (III) in the monomer composition is not specifically limited but is preferably 5 mass% or more, more preferably 10 mass% or more, even more preferably 20 mass% or more, further preferably 25 mass% or more, and particularly preferably 30 mass% or more, and is preferably 95 mass% or less, more preferably 90 mass% or less, even more preferably 80 mass% or less, and particularly preferably 70 mass% or less.

The proportion constituted by the compound represented by formula (IV) in the monomer composition is not specifically limited but is preferably 5 mass% or more, more preferably 10 mass% or more, even more preferably 20 mass% or more, and particularly preferably 30 mass% or more, and is preferably 95 mass% or less, more preferably 90 mass% or less, even more preferably 80 mass% or less, further preferably 75 mass% or less, and particularly preferably 70 mass% or less.

Note that other compounds that can optionally be contained in the monomer composition can be compounds having any structure without any specific limitations so long as they are copolymerizable with the compounds described above.

The proportion constituted by other compounds in the monomer composition is not specifically limited but is preferably 10 mass% or less, more preferably 5 mass% or less, and even more preferably zero (i.e., other compounds are not included).

### [Ether compound]

In step (A), an ether compound represented by the following formula (V) is required to be used as the ether compound. The ether compound is a component that can function as a polymerization initiator in the ring-opening polymerization reaction performed in step (A).

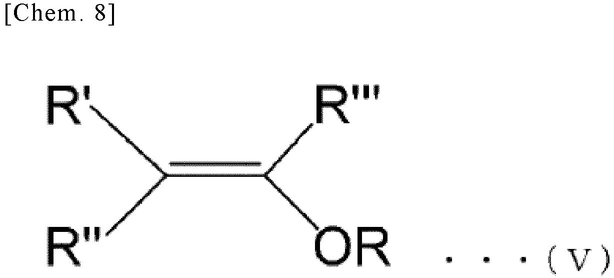

In formula (V), R to R‴ are each, independently of one another, a group having a carbon number of not less than 1 and not more than 12 that may include one or more atoms selected from the group consisting of a halogen atom, a silicon atom, an oxygen atom, and a nitrogen atom. Note that R to R‴ may be bonded to one another to form a ring.

In particular, from a viewpoint of efficiently obtaining a random copolymer, it is preferable that at least one of R to R‴ in formula (V) is a group having a carbon number of not less than 1 and not more than 12 that includes one or more atoms selected from the group consisting of a halogen atom, a silicon atom, an oxygen atom, and a nitrogen atom, more preferable that at least one of R to R‴ in formula (V) is a group having a carbon number of not less than 1 and not more than 12 that includes an oxygen atom, and even more preferable that at least one of R to R‴ in formula (V) is a group having a carbon number of not less than 1 and not more than 12 that includes an ether bond. Moreover, from a viewpoint of efficiently obtaining a random copolymer, R or a ring formed through bonding of R to R" or R‴ in formula (V) is preferably a group having a carbon number of not less than 1 and not more than 12 that includes an oxygen atom, more preferably a group having a carbon number of not less than 1 and not more than 12 that includes an oxygen atom and does not include a carbon-carbon unsaturated bond, and even more preferably a group having a carbon number of not less than 1 and not more than 12 that includes an ether bond and does not include a carbon-carbon unsaturated bond.

More specifically, the ether compound represented by formula (V) may be 1-cyclohexenyl-2-methoxyethene, ethyl-1-propenyl ether, 3,4-dihydropyran, 2-vinyloxytetrahydropyran, 3-ethoxyacrylonitrile, 3,4-dihydro-2-methoxy-2H-pyran, or 3,4-dihydro-2-ethoxy-2H-pyran, but is not specifically limited thereto. In particular, from a viewpoint of more efficiently obtaining a random copolymer, the ether compound represented by formula (V) is preferably a compound having two or more ether bonds in a molecule, and more preferably 3,4-dihydro-2-methoxy-2H-pyran, 3,4-dihydro-2-ethoxy-2H-pyran, or 2-vinyloxytetrahydropyran.

One of these compounds can be used individually, or two or more of these compounds can be used as a mixture.

### [Catalyst]

A photoredox catalyst can suitably be used without any specific limitations as the catalyst that is added into the polymerization system in step (A). A photoredox catalyst is a compound that can generate a radical species upon irradiation with ultraviolet/visible region light such as visible light having a wavelength of 425 nm, for example. Examples of photoredox catalysts that can suitably be used include pyrylium salts and acridinium salts such as described in WO2016/036976A1, for example. In particular, a pyrylium salt can suitably be used as a photoredox catalyst in step (A). The pyrylium salt may be a pyrylium salt represented by the following formula (VI).

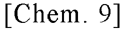

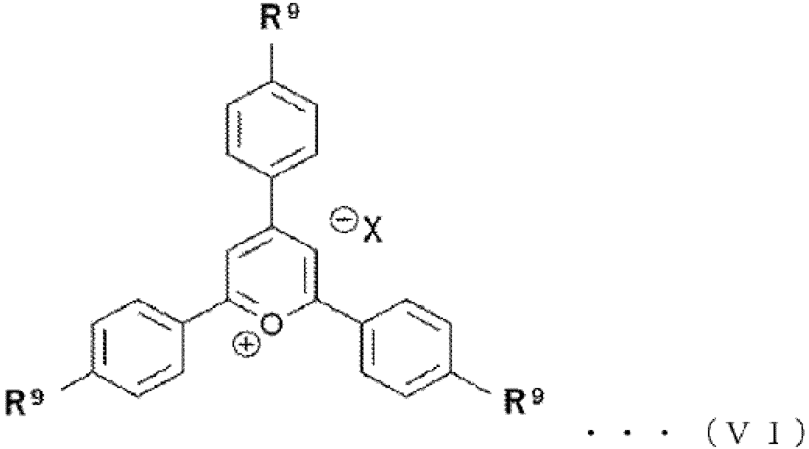

In formula (VI), each R⁹ indicates, independently of one another, hydrogen, an alkyl group having a carbon number of 1 to 6, an alkoxy group having a carbon number of 1 to 6, or an aryl group, and X⁻ indicates a monovalent anion. Note that the alkyl group having a carbon number of 1 to 6, the alkoxy group having a carbon number of 1 to 6, and the aryl group are optionally substituted.

In particular, it is preferable that every R⁹ is a methoxy group and that X⁻ is BF₄⁻. In other words, the pyrylium salt represented by formula (VI) is preferably 2,4,6-tris(4-methoxyphenyl)pyrylium tetrafluoroborate.

Note that it is preferable that the catalyst used in step (A) does not include a metal.

### [Solvent]

The ring-opening polymerization is preferably performed in a solvent from a viewpoint of enabling good reaction control, and, in particular, is preferably performed in an organic solvent.

No specific limitations are placed on the organic solvent that is used so long as it enables dissolution or dispersion of the obtained ring-opened polymer and is inert in the polymerization reaction. Specific examples include aliphatic hydrocarbon solvents such as pentane, hexane, and heptane; alicyclic hydrocarbon solvents such as cyclopentane, cyclohexane, methylcyclohexane, dimethylcyclohexane, trimethylcyclohexane, ethylcyclohexane, diethylcyclohexane, decahydronaphthalene, bicycloheptane, tricyclodecane, hexahydroindene cyclohexane, and cyclooctane; aromatic hydrocarbon solvents such as benzene, toluene, and xylene (o-xylene, m-xylene, and p-xylene); halogenated aliphatic hydrocarbon solvents such as dichloromethane, chloroform, 1,2-dichloroethane, and 1,1,2,2-tetrachloroethane; halogenated aromatic hydrocarbon solvents such as chlorobenzene and dichlorobenzene; nitrogen-containing hydrocarbon solvents such as nitromethane, nitrobenzene, and acetonitrile; ether solvents such as diethyl ether and tetrahydrofuran; and aromatic ether solvents such as anisole and phenetole. One solvent may be used individually, or two or more solvents may be used in combination. It is particularly preferable to use a halogenated aliphatic hydrocarbon solvent as the solvent.

### [Ring-opening polymerization]

Note that the conditions of ring-opening polymerization (used amounts of components described above, polymerization time, polymerization temperature, etc.) can, without any specific limitations, be set as appropriate depending on the desired physical properties of the random copolymer.

### <Step (B)>

In step (B), the ring-opened polymer obtained in step (A) is hydrogenated to obtain a random copolymer.

Note that in a case in which the ring-opening polymerization is performed using a solvent in step (A), although the obtained ring-opened polymer may be collected from the reaction liquid and then subjected to the hydrogenation reaction, it is also possible to subject the reaction liquid containing the ring-opened polymer to the hydrogenation reaction in that form.

### [Hydrogenation]

In step (B), at least some of the carbon-carbon double bonds in the ring-opened polymer are hydrogenated. Note that in step (B), the percentage hydrogenation (mole basis) in the resultant hydrogenated product (random copolymer) may preferably be adjusted to 90% or more, may preferably be adjusted to 95% or more, or may preferably be adjusted 99% or more. The percentage hydrogenation (mole basis) of a ring-opened polymer can be determined by ¹H-NMR measurement.

More specifically, in step (B), hydrogenation of carbon-carbon double bonds present in the ring-opened polymer can, without any specific limitations, be performed by: (a) adding a hydrogenating agent to the system containing the ring-opened polymer obtained by step (A) and then performing heating to cause a reaction to occur (transfer hydrogenation reaction); or (b) adding a hydrogenation catalyst to the system and then adding hydrogen and causing a reaction to occur (catalytic hydrogenation reaction).

The hydrogenating agent used in the (a) transfer hydrogenation reaction described above may be any hydrogenating agent without any specific limitations so long as it is a hydrogenating agent that enables hydrogenation of carbon-carbon double bonds present in the ring-opened polymer. For example, the hydrogenating agent may be hydrazine, p-toluenesulfonyl hydrazide, or the like.

Moreover, any hydrogenation catalyst that is typically used in a hydrogenation reaction of an olefin compound can be used without any specific limitations as the hydrogenation catalyst used in the (b) catalytic hydrogenation reaction described above. Examples of the hydrogenation catalyst include Ziegler catalysts that are a combination of a transition metal compound and an alkali metal compound such as a combination of cobalt acetate and triethylaluminum, a combination of nickel acetylacetonate and triisobutylaluminum, a combination of titanocene dichloride and n-butyllithium, a combination of zirconocene dichloride and sec-butyllithium, and a combination of tetrabutoxytitanate and dimethylmagnesium; precious metal complex catalysts formed of dichlorotris(triphenylphosphine)rhodium or a ruthenium compound such as RuHCl(CO)(PPh₃)₃, RuHCl(CO)[P(p-Me-Ph)₃]₃, RuHCl(CO)(PCy₃)₂, RuHCl(CO)[P(n-Bu)₃]₃, RuHCl(CO)[P(i-Pr)₃]₂, RuH₂(CO)(PPh₃)₃, RuH₂(CO)[P(p-Me-Ph)₃]₃, RuH₂(CO)(PCy₃)₃, RuH₂(CO)[P(n-Bu)₃]₃, RuH(OCOCH₃)(CO)(PPh₃)₂, RuH(OCOPh)(CO)(PPh₃)₂, RuH(OCOPh-CH₃)(CO)(PPh₃)₂, RuH(OCOPh-OCH₃)(CO)(PPh₃)₂, or RuH(OCOPh)(CO)(PCy₃)₂; other such homogeneous catalysts; and supported heterogeneous catalysts in which a metal such as nickel, palladium, platinum, rhodium, or ruthenium is supported on a support such as carbon, silica, diatomaceous earth, alumina, or titanium oxide.

One hydrogenation catalyst may be used individually, or two or more hydrogenation catalysts may be used in combination. A supported heterogeneous catalyst is preferably used as the hydrogenation catalyst because this makes it possible to easily remove the hydrogenation catalyst from the reaction solution by filtration after the hydrogenation reaction.

The supported heterogeneous catalyst is, more specifically, preferably a combination such as nickel/silica, nickel/diatomaceous earth, nickel/alumina, palladium/carbon, palladium/silica, palladium/diatomaceous earth, or palladium/alumina.

The conditions of the hydrogenation reaction (used amount of hydrogenating agent or hydrogenation catalyst, reaction time, reaction temperature, hydrogen pressure when performing catalytic hydrogenation reaction according to (b), etc.) can be set as appropriate depending on the desired physical properties (for example, percentage hydrogenation) of the random copolymer without any specific limitations.

The solvent when hydrogenation is performed in step (B) is not specifically limited and can be any of the solvents listed as solvents (particularly organic solvents) that can be used in the previously described step (A), for example.

### <After treatment step>

In the presently disclosed production method, an after treatment step can be performed as necessary following step (A) and step (B) described above. In the after treatment step, the target random copolymer can be isolated well by subjecting the reaction liquid containing the random copolymer that has been obtained in step (B) to coagulation drying or direct drying using a thin-film dryer or the like, for example. Note that the random copolymer can normally be obtained as a solid having a powder or pellet form.

### (Use of random copolymer)

The presently disclosed random copolymer can be mixed with known additives as necessary to obtain a resin composition and can then advantageously be used as a material of a shaped product such as a film, for example.

Examples of known additives that can be used include, but are not specifically limited to, polymers (thermoplastic elastomers, etc.) other than the presently disclosed random copolymer, fillers, antioxidants, mold release agents, flame retardants, antibacterial agents, wood flour, coupling agents, plasticizers, colorants, lubricants, silicon oil, foaming agents, surfactants, light stabilizers, dispersion aids, heat stabilizers, ultraviolet absorbers, antistatic agents, dispersants, chlorine scavengers, crystallization nucleating agents, antifogging agents, organic fillers, neutralizers, decomposers, metal deactivators, and antifouling agents. One of these additives may be used individually, or two or more of these additives may be used in combination.

### EXAMPLES

The following provides a more specific description of the present disclosure through examples. However, the present disclosure is not limited to these examples. In the following description, "%" and "parts" used in expressing quantities are by mass, unless otherwise specified.

In the examples and comparative examples, the following methods were used to measure and evaluate the weight-average molecular weight, chemical composition, and percentage hydrogenation of a polymer, and the water vapor barrier performance, oxygen barrier performance, oil resistance, and close adherence to a PVOH film of a film formed of a polymer.

### <Weight-average molecular weight>

The weight-average molecular weight of a polymer was measured as a standard polystyrene-equivalent value by gel permeation chromatography (GPC) using tetrahydrofuran as an eluent. An HLC8320GPC (produced by Tosoh Corporation) was used as a measurement apparatus. A sample was prepared by dissolving a measurement sample in tetrahydrofuran at room temperature such that the sample concentration was 1 mg/mL.

Measurement was performed under conditions of a flow rate of 0.35 mL/min, a sample injection volume of 10 µL, and a column temperature of 40°C using four SuperMultiporeHZ-H columns (produced by Tosoh Corporation) connected in series as a column.

### <Chemical composition>

A ratio of the number of hydrogen atoms attributed to each repeating unit was determined based on ¹H-NMR measurement, and then a copolymerization chemical composition ratio was calculated based on this ratio.

### <Percentage hydrogenation>

Percentage hydrogenation was determined based on the results of ¹H-NMR measurement performed before and after hydrogenation.

### <Water vapor barrier performance>

The water vapor permeability of a produced film under conditions of a temperature of 40°C and a relative humidity of 90% RH was measured based on JIS K7129 using a water vapor permeability tester (model L80-5000 produced by Lyssy), and then a converted value for a film thickness of 100 µm was determined. A smaller water vapor permeability (g/(m²·24 h)) indicates better water vapor barrier performance.

### <Oxygen barrier performance>

The oxygen permeability of a produced film under conditions of a temperature of 23°C and a relative humidity of 90% RH was measured based on JIS K7126 using an oxygen permeability tester (model OPT-5000 produced by Lyssy), and then a converted value for a film thickness of 100 µm was determined. A smaller oxygen permeability (cm³/(m²·24 h·atm)) indicates better oxygen barrier performance.

### <Oil resistance>

Salad oil (produced by Nisshin OilliO Group, Ltd.) was applied onto a produced film. The film was loaded into an oven that was heated to 40°C, and the change of external appearance of the film after 24 hours was visually observed. An evaluation was made by the following standard.
O: No change
Δ: Coloring of film
×: Damage of film

### <Close adherence to PVOH film>

A produced film was stacked with a film of partially saponified (degree of saponification: 99 mol%) polyvinyl acetate (PVAc) and was molded by vacuum heat pressing to obtain a laminate. Upon measurement of the thickness of this laminate, a portion corresponding to a layer formed of the produced film was 20 µm and a portion corresponding to a layer formed of the partially saponified PVAc was 20 µm.

The obtained laminate was used to evaluate film close adherence. Specifically, a grid of 10 squares of 1 mm × 1 mm was inscribed in the laminate using a cutter, a cellophane tape peeling test was performed, and close adherence was evaluated in accordance with the following standard.
O: Number of peeled squares is 0
Δ: Number of peeled squares is 1 to 5
×: Number of peeled squares is more than 5

### (Example 1)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.85 g of norbornene and 0.90 g of methyl methacrylate dissolved in 1.75 g of dichloromethane was added and stirred. Next, 13.2 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.19 g. The weight-average molecular weight of the obtained polymer was 7,300. According to ¹H-NMR measurement, the obtained polymer was formed of repeating units of ring-opened norbornene and repeating units of vinyl-addition polymerized methyl methacrylate and had an introduction ratio of ring-opened norbornene and methyl methacrylate of 60:40 (mass ratio). In this manner, a copolymer of ring-opened norbornene and methyl methacrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (methyl methacrylate-derived repeating units) of vinyl-addition polymerized methyl methacrylate and had a ratio of norbornene-derived repeating units and methyl methacrylate-derived repeating units of 60:40 (mass ratio). The weight-average molecular weight of the obtained hydrogenated copolymer was 7,400.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 2)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.85 g of norbornene and 0.90 g of methyl methacrylate dissolved in 1.75 g of dichloromethane was added and stirred. Next, 3.29 mg of 2-vinyloxytetrahydropyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.19 g. The weight-average molecular weight of the obtained polymer was 21,800. According to ¹H-NMR measurement, the obtained polymer was formed of repeating units of ring-opened norbornene and repeating units of vinyl-addition polymerized methyl methacrylate and had an introduction ratio of ring-opened norbornene and methyl methacrylate of 60:40 (mass ratio). In this manner, a copolymer of ring-opened norbornene and methyl methacrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (methyl methacrylate-derived repeating units) of vinyl-addition polymerized methyl methacrylate and had a ratio of norbornene-derived repeating units and norbornene-derived repeating units of 60:40 (mass ratio). The weight-average molecular weight of the obtained hydrogenated copolymer was 21,900.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 3)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.44 g of norbornene and 1.40 g of methyl methacrylate dissolved in 1.75 g of dichloromethane was added and stirred. Next, 13.2 mg of 2-vinyloxytetrahydropyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.32 g. The weight-average molecular weight of the obtained polymer was 20,900. According to ¹H-NMR measurement, the obtained polymer was formed of repeating units of ring-opened norbornene and repeating units of vinyl-addition polymerized methyl methacrylate and had an introduction ratio of ring-opened norbornene and methyl methacrylate of 32:68 (mass ratio). In this manner, a copolymer of ring-opened norbornene and methyl methacrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (methyl methacrylate-derived repeating units) of vinyl-addition polymerized methyl methacrylate and had a ratio of norbornene-derived repeating units and methyl methacrylate-derived repeating units of 32:68 (mass ratio). The weight-average molecular weight of the obtained hydrogenated copolymer was 21,000.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 4)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.44 g of norbornene and 1.40 g of methyl methacrylate dissolved in 1.75 g of dichloromethane was added and stirred. Next, 3.29 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.32 g. The weight-average molecular weight of the obtained polymer was 60,200. According to ¹H-NMR measurement, the obtained polymer was formed of repeating units of ring-opened norbornene and repeating units of vinyl-addition polymerized methyl methacrylate and had an introduction ratio of ring-opened norbornene and methyl methacrylate of 32:68 (mass ratio). In this manner, a copolymer of ring-opened norbornene and methyl methacrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (methyl methacrylate-derived repeating units) of vinyl-addition polymerized methyl methacrylate and had a ratio of norbornene-derived repeating units and methyl methacrylate-derived repeating units of 32:68 (mass ratio). The weight-average molecular weight of the obtained hydrogenated copolymer was 60,400.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 5)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.74 g of norbornene and 1.01 g of butyl acrylate dissolved in 1.75 g of dichloromethane was added and stirred. Next, 13.2 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.14 g. The weight-average molecular weight of the obtained polymer was 26,800. According to ¹H-NMR measurement, the obtained polymer was formed of repeating units of ring-opened norbornene and repeating units of vinyl-addition polymerized butyl acrylate and had an introduction ratio of ring-opened norbornene and butyl acrylate of 60:40 (mass ratio). In this manner, a copolymer of ring-opened norbornene and butyl acrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (butyl acrylate-derived repeating units) of vinyl-addition polymerized butyl acrylate and had a ratio of norbornene-derived repeating units and butyl acrylate-derived repeating units of 60:40 (mass ratio). The weight-average molecular weight of the obtained hydrogenated copolymer was 26,900.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 6)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.74 g of norbornene and 1.01 g of butyl acrylate dissolved in 1.75 g of dichloromethane was added and stirred. Next, 3.29 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.14 g. The weight-average molecular weight of the obtained polymer was 81,800. According to ¹H-NMR measurement, the obtained polymer was formed of repeating units of ring-opened norbornene and repeating units of vinyl-addition polymerized butyl acrylate and had an introduction ratio of ring-opened norbornene and butyl acrylate of 60:40 (mass ratio). In this manner, a copolymer of ring-opened norbornene and butyl acrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (butyl acrylate-derived repeating units) of vinyl-addition polymerized butyl acrylate and had a ratio of norbornene-derived repeating units and butyl acrylate-derived repeating units of 60:40 (mass ratio). The weight-average molecular weight of the obtained hydrogenated copolymer was 82,000.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 7)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.44 g of norbornene and 1.79 g of butyl acrylate dissolved in 1.75 g of dichloromethane was added and stirred. Next, 13.2 mg of 2-vinyloxytetrahydropyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.12 g. The weight-average molecular weight of the obtained polymer was 54,000. According to ¹H-NMR measurement, the obtained polymer was formed of repeating units of ring-opened norbornene and repeating units of vinyl-addition polymerized butyl acrylate and had an introduction ratio of ring-opened norbornene and butyl acrylate of 42:58 (mass ratio). In this manner, a copolymer of ring-opened norbornene and butyl acrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (butyl acrylate-derived repeating units) of vinyl-addition polymerized butyl acrylate and had a ratio of norbornene-derived repeating units and butyl acrylate-derived repeating units of 42:58 (mass ratio). The weight-average molecular weight of the obtained hydrogenated copolymer was 54,100.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 8)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.85 g of norbornene and 0.48 g of acrylonitrile dissolved in 1.75 g of dichloromethane was added and stirred. Next, 13.2 mg of 2-vinyloxytetrahydropyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.15 g. The weight-average molecular weight of the obtained polymer was 8,700. According to ¹H-NMR measurement, the obtained polymer was formed of repeating units of ring-opened norbornene and repeating units of vinyl-addition polymerized acrylonitrile and had an introduction ratio of ring-opened norbornene and acrylonitrile of 55:45 (mass ratio). In this manner, a copolymer of ring-opened norbornene and acrylonitrile was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (acrylonitrile-derived repeating units) of vinyl-addition polymerized acrylonitrile and had a ratio of norbornene-derived repeating units and acrylonitrile-derived repeating units of 55:45 (mass ratio). The weight-average molecular weight of the obtained hydrogenated copolymer was 8,800.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 9)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.85 g of norbornene and 0.48 g of acrylonitrile dissolved in 1.75 g of dichloromethane was added and stirred. Next, 3.29 mg of 2-vinyloxytetrahydropyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.15 g. The weight-average molecular weight of the obtained polymer was 26,600. According to ¹H-NMR measurement, the obtained polymer was formed of repeating units of ring-opened norbornene and repeating units of vinyl-addition polymerized acrylonitrile and had an introduction ratio of ring-opened norbornene and acrylonitrile of 55:45 (mass ratio). In this manner, a copolymer of ring-opened norbornene and acrylonitrile was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (acrylonitrile-derived repeating units) of vinyl-addition polymerized acrylonitrile and had a ratio of norbornene-derived repeating units and acrylonitrile-derived repeating units of 55:45 (mass ratio). The weight-average molecular weight of the obtained hydrogenated copolymer was 26,700.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 10)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.57 g of norbornene and 0.64 g of acrylonitrile dissolved in 1.75 g of dichloromethane was added and stirred. Next, 13.2 mg of 2-vinyloxytetrahydropyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.22 g. The weight-average molecular weight of the obtained polymer was 21,400. According to ¹H-NMR measurement, the obtained polymer was formed of repeating units of ring-opened norbornene and repeating units of vinyl-addition polymerized acrylonitrile and had an introduction ratio of ring-opened norbornene and acrylonitrile of 39:61 (mass ratio). In this manner, a copolymer of ring-opened norbornene and acrylonitrile was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (acrylonitrile-derived repeating units) of vinyl-addition polymerized acrylonitrile and had an introduction ratio of norbornene-derived repeating units and acrylonitrile-derived repeating units of 39:61 (mass ratio). The weight-average molecular weight of the obtained hydrogenated copolymer was 21,500.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 11)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.57 g of norbornene and 0.64 g of acrylonitrile dissolved in 1.75 g of dichloromethane was added and stirred. Next, 3.29 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.22 g. The weight-average molecular weight of the obtained polymer was 62,000. According to ¹H-NMR measurement, the obtained polymer was formed of repeating units of ring-opened norbornene and repeating units of vinyl-addition polymerized acrylonitrile and had an introduction ratio of ring-opened norbornene and acrylonitrile of 39:61 (mass ratio). In this manner, a copolymer of ring-opened norbornene and acrylonitrile was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (acrylonitrile-derived repeating units) of vinyl-addition polymerized acrylonitrile and had a ratio of norbornene-derived repeating units and acrylonitrile-derived repeating units of 39:61 (mass ratio). The weight-average molecular weight of the obtained hydrogenated copolymer was 62,100.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 12)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.85 g of dicyclopentadiene and 0.90 g of methyl methacrylate dissolved in 1.75 g of dichloromethane was added and stirred. Next, 13.2 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.12 g. The weight-average molecular weight of the obtained polymer was 5,500. According to ¹H-NMR measurement, the obtained polymer was formed of repeating units of dicyclopentadiene that had undergone ring opening of a norbornene ring and repeating units of vinyl-addition polymerized methyl methacrylate and had an introduction ratio of ring-opened dicyclopentadiene and methyl methacrylate of 45:55 (mass ratio). In this manner, a copolymer of ring-opened dicyclopentadiene and methyl methacrylate was obtained.

### <Hydrogenation>

Next, 0.1 g of the copolymer obtained as described above and 1.6 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (dicyclopentadiene-derived repeating units) resulting from hydrogenation of ring-opened dicyclopentadiene repeating units and repeating units (methyl methacrylate-derived repeating units) of vinyl-addition polymerized methyl methacrylate and had a ratio of dicyclopentadiene-derived repeating units and methyl methacrylate-derived repeating units of 45:55 (mass ratio). The weight-average molecular weight of the obtained hydrogenated copolymer was 5,500.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 13)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.85 g of dicyclopentadiene and 0.90 g of methyl methacrylate dissolved in 1.75 g of dichloromethane was added and stirred. Next, 3.29 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.12 g. The weight-average molecular weight of the obtained polymer was 18,300. According to ¹H-NMR measurement, the obtained polymer was formed of repeating units of dicyclopentadiene that had undergone ring opening of a norbornene ring and repeating units of vinyl-addition polymerized methyl methacrylate and had an introduction ratio of ring-opened dicyclopentadiene and methyl methacrylate of 45:55 (mass ratio). In this manner, a copolymer of ring-opened dicyclopentadiene and methyl methacrylate was obtained.

### <Hydrogenation>

Next, 0.1 g of the copolymer obtained as described above and 1.6 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (dicyclopentadiene-derived repeating units) resulting from hydrogenation of ring-opened dicyclopentadiene repeating units and repeating units (methyl methacrylate-derived repeating units) of vinyl-addition polymerized methyl methacrylate and had a ratio of dicyclopentadiene-derived repeating units and methyl methacrylate-derived repeating units of 45:55 (mass ratio). The weight-average molecular weight of the obtained hydrogenated copolymer was 18,400.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 14)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.44 g of dicyclopentadiene and 1.79 g of butyl acrylate dissolved in 1.75 g of dichloromethane was added and stirred. Next, 3.29 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.10 g. The weight-average molecular weight of the obtained polymer was 54,000. According to ¹H-NMR measurement, the obtained polymer was formed of repeating units of dicyclopentadiene that had undergone ring opening of a norbornene ring and repeating units of vinyl-addition polymerized butyl acrylate and had an introduction ratio of ring-opened dicyclopentadiene and butyl acrylate of 34:66 (mass ratio). In this manner, a copolymer of ring-opened dicyclopentadiene and butyl acrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (dicyclopentadiene-derived repeating units) resulting from hydrogenation of ring-opened dicyclopentadiene repeating units and repeating units (butyl acrylate-derived repeating units) of vinyl-addition polymerized butyl acrylate and had a ratio of dicyclopentadiene-derived repeating units and butyl acrylate-derived repeating units of 34:66 (mass ratio). The weight-average molecular weight of the obtained hydrogenated copolymer was 54,200.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 15)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.75 g of norbornene, 0.10 g of dicyclopentadiene, and 0.90 g of methyl methacrylate dissolved in 1.75 g of dichloromethane was added and stirred. Next, 3.29 mg of 2-vinyloxytetrahydropyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.16 g. The weight-average molecular weight of the obtained polymer was 26,500. According to ¹H-NMR measurement, the obtained polymer was formed of repeating units of ring-opened norbornene, repeating units of ring-opened dicyclopentadiene, and repeating units of vinyl-addition polymerized methyl methacrylate and had an introduction ratio of ring-opened norbornene, ring-opened dicyclopentadiene, and methyl methacrylate of 65:6:29 (mass ratio). In this manner, a copolymer of ring-opened norbornene, ring-opened dicyclopentadiene, and methyl methacrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units, repeating units (dicyclopentadiene-derived repeating units) resulting from hydrogenation of ring-opened dicyclopentadiene repeating units, and repeating units (methyl methacrylate-derived repeating units) of vinyl-addition polymerized methyl methacrylate and had a ratio of norbornene-derived repeating units, dicyclopentadiene-derived repeating units, and methyl methacrylate-derived repeating unit of 65:6:29 (mass ratio). The weight-average molecular weight of the obtained hydrogenated copolymer was 27,000.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 16)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.70 g of norbornene, 0.1 g of tetracyclododecene, and 1.01 g of butyl acrylate dissolved in 1.75 g of dichloromethane was added and stirred. Next, 3.29 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.11 g. The weight-average molecular weight of the obtained polymer was 58,700. According to ¹H-NMR measurement, the obtained polymer was formed of repeating units of ring-opened norbornene, repeating units of tetracyclododecene that had undergone ring-opening of a norbornene ring, and repeating units of vinyl-addition polymerized butyl acrylate and had an introduction ratio of ring-opened norbornene, ring-opened tetracyclododecene, and butyl acrylate of 61:4:35 (mass ratio). In this manner, a copolymer of ring-opened norbornene, ring-opened tetracyclododecene, and butyl acrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units, repeating units (tetracyclododecene-derived repeating units) resulting from hydrogenation of ring-opened tetracyclododecene repeating units, and repeating units (butyl acrylate-derived repeating units) of vinyl-addition polymerized butyl acrylate and had an introduction ratio of norbornene-derived repeating units, tetracyclododecene-derived repeating units, and butyl acrylate-derived repeating unit of 61:4:35 (mass ratio). The weight-average molecular weight of the obtained hydrogenated copolymer was 59,000.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 17)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.47 g of norbornene, 0.10 g of dicyclopentadiene, and 0.64 g of acrylonitrile dissolved in 1.75 g of dichloromethane was added and stirred. Next, 3.29 mg of 2-ethoxy-3,4-dihydro-2H-pyran was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.18 g. The weight-average molecular weight of the obtained polymer was 38,100. According to ¹H-NMR measurement, the obtained polymer was formed of repeating units of ring-opened norbornene, repeating units of ring-opened dicyclopentadiene, and repeating units of vinyl-addition polymerized acrylonitrile and had an introduction ratio of ring-opened norbornene, ring-opened dicyclopentadiene, and acrylonitrile of 37:4:59 (mass ratio). In this manner, a copolymer of ring-opened norbornene, ring-opened dicyclopentadiene, and acrylonitrile was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units, repeating units (dicyclopentadiene-derived repeating units) resulting from hydrogenation of ring-opened dicyclopentadiene repeating units, and repeating units (acrylonitrile-derived repeating units) of vinyl-addition polymerized acrylonitrile and had an introduction ratio of norbornene-derived repeating units, dicyclopentadiene-derived repeating units, and acrylonitrile-derived repeating units of 37:4:59 (mass ratio). The weight-average molecular weight of the obtained hydrogenated copolymer was 38,500.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 1.

### (Example 18)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.44 g of norbornene and 1.40 g of methyl methacrylate dissolved in 1.75 g of dichloromethane was added and stirred. Next, 8.85 mg of ethyl-1-propenyl ether was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.29 g. The weight-average molecular weight of the obtained polymer was 6,400. According to ¹H-NMR measurement, the obtained polymer was formed of repeating units of ring-opened norbornene and repeating units of vinyl-addition polymerized methyl methacrylate and had an introduction ratio of ring-opened norbornene and methyl methacrylate of 81:19 (mass ratio). In this manner, a copolymer of ring-opened norbornene and methyl methacrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (methyl methacrylate-derived repeating units) of vinyl-addition polymerized methyl methacrylate and had a ratio of norbornene-derived repeating units and methyl methacrylate-derived repeating units of 82:18 (mass ratio). The weight-average molecular weight of the obtained hydrogenated copolymer was 6,400.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 2.

### (Example 19)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.85 g of norbornene and 0.90 g of methyl methacrylate dissolved in 1.75 g of dichloromethane was added and stirred. Next, 8.85 mg of ethyl-1-propenyl ether was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.49 g. The weight-average molecular weight of the obtained polymer was 4,600. According to ¹H-NMR measurement, the obtained polymer was formed of repeating units of ring-opened norbornene and repeating units of vinyl-addition polymerized methyl methacrylate and had an introduction ratio of ring-opened norbornene and methyl methacrylate of 95:5 (mass ratio). In this manner, a copolymer of ring-opened norbornene and methyl methacrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (methyl methacrylate-derived repeating units) of vinyl-addition polymerized methyl methacrylate and had a ratio of norbornene-derived repeating units and methyl methacrylate-derived repeating units of 95:5 (mass ratio). The weight-average molecular weight of the obtained hydrogenated copolymer was 4,600.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 2.

### (Example 20)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.65 g of norbornene and 1.10 g of methyl methacrylate dissolved in 1.75 g of dichloromethane was added and stirred. Next, 14.1 mg of 1-cyclohexenyl-2-methoxyethene was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.37 g. The weight-average molecular weight of the obtained polymer was 7,100. According to ¹H-NMR measurement, the obtained polymer was formed of repeating units of ring-opened norbornene and repeating units of vinyl-addition polymerized methyl methacrylate and had an introduction ratio of ring-opened norbornene and methyl methacrylate of 89:11 (mass ratio). In this manner, a copolymer of ring-opened norbornene and methyl methacrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (methyl methacrylate-derived repeating units) of vinyl-addition polymerized methyl methacrylate and had a ratio of norbornene-derived repeating units and methyl methacrylate-derived repeating units of 89: 11 (mass ratio). The weight-average molecular weight of the obtained hydrogenated copolymer was 7,200.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 2.

### (Example 21)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 0.85 g of norbornene and 0.90 g of butyl acrylate dissolved in 1.75 g of dichloromethane was added and stirred. Next, 14.1 mg of 1-cyclohexenyl-2-methoxyethene was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.26 g. The weight-average molecular weight of the obtained polymer was 3,400. According to ¹H-NMR measurement, the obtained polymer was formed of repeating units of ring-opened norbornene and repeating units of vinyl-addition polymerized butyl acrylate and had an introduction ratio of ring-opened norbornene and butyl acrylate of 66:34 (mass ratio). In this manner, a copolymer of ring-opened norbornene and butyl acrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (butyl acrylate-derived repeating units) of vinyl-addition polymerized butyl acrylate and had a ratio of norbornene-derived repeating units and butyl acrylate-derived repeating units of 66:34 (mass ratio). The weight-average molecular weight of the obtained hydrogenated copolymer was 3,400.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 2.

### (Example 22)

### <Production of ring-opened polymer>

A glass reactor equipped with a stirrer was charged with 5 mg of 2,4,6-tris(4-methoxyphenyl)pyrylium tetrafluoroborate and 5 mL of dichloromethane and was stirred. Next, a solution of 1.47 g of norbornene and 0.28 g of butyl acrylate dissolved in 1.75 g of dichloromethane was added and stirred. Next, 8.85 mg of ethyl-1-propenyl ether was added and stirred, and then light irradiation with an LED lamp was initiated so as to initiate a polymerization reaction. The reaction was performed at room temperature for 15 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 0.41 g. The weight-average molecular weight of the obtained polymer was 4,900. According to ¹H-NMR measurement, the obtained polymer was formed of repeating units of ring-opened norbornene and repeating units of vinyl-addition polymerized butyl acrylate and had an introduction ratio of ring-opened norbornene and butyl acrylate of 93:7 (mass ratio). In this manner, a copolymer of ring-opened norbornene and butyl acrylate was obtained.

### <Hydrogenation>

Next, 0.1 g of the copolymer obtained as described above and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated copolymer (random copolymer), which was then filtered off and washed, and was subsequently dried under reduced pressure at 40°C for 24 hours. The obtained hydrogenated copolymer had a percentage hydrogenation of 99% or more, and, according to ¹H-NMR measurement, was formed of repeating units (norbornene-derived repeating units) resulting from hydrogenation of ring-opened norbornene repeating units and repeating units (butyl acrylate-derived repeating units) of vinyl-addition polymerized butyl acrylate and had a ratio of norbornene-derived repeating units and butyl acrylate-derived repeating units of 93:7 (mass ratio). The weight-average molecular weight of the obtained hydrogenated copolymer was 5,000.

### <Formation of film>

The obtained hydrogenated copolymer (random copolymer) was molded to a thickness of 21 µm to 28 µm by vacuum heat pressing so as to obtain a single-layer film.

Various evaluations were performed. The results are shown in Table 2.

### (Comparative Example 1)

### <Production of ring-opened polymer>

A glass reactor equipped with a stirrer was charged with 0.31 mg of bis(tricyclohexylphosphine)benzylidene ruthenium dichloride and 5 mL of toluene and was then stirred. Next, a solution of 1.75 g of norbornene and 0.0016 g of 1-hexene dissolved in 3.0 g of toluene was added and stirred, and a polymerization reaction was initiated. The reaction was performed at room temperature for 3 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 1.74 g. The weight-average molecular weight of the obtained polymer was 95,000. According to ¹H-NMR measurement, the obtained polymer was formed of only repeating units of ring-opened norbornene.

### <Hydrogenation>

Next, 0.1 g of the obtained polymer and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated polymer, which was then filtered off and washed, and was subsequently dried under reduced pressure at 40°C for 24 hours. The obtained hydrogenated polymer had a percentage hydrogenation of 99% or more, and, according to ¹H-NMR measurement, was formed of only repeating units (norbornene-derived repeating units) resulting from hydrogenation of ring-opened norbornene repeating units. Note that the weight-average molecular weight of the hydrogenated polymer was not measured due to the solubility thereof and was assumed to be the same as that of the non-hydrogenated polymer.

### <Formation of film>

The obtained hydrogenated polymer was molded to a thickness of 21 µm to 28 µm by vacuum heat pressing so as to obtain a single-layer film.

Various evaluations were performed. The results are shown in Table 3.

### (Comparative Example 2)

### <Production of homopolymer>

A glass reactor equipped with a stirrer was charged with 8.5 mg of dibenzyl trithiocarbonate, 0.23 mg of azobisisobutyronitrile (AIBN), and 5 mL of toluene and was then stirred. Next, a solution of 1.75 g of methyl methacrylate dissolved in 3 mL of toluene was added and stirred, and a polymerization reaction was initiated at 60°C. The reaction was performed for 3 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 1.57 g. The weight-average molecular weight of the obtained polymer was 61,000. According to ¹H-NMR measurement, the obtained polymer was polymethyl methacrylate (PMMA).

### <Formation of film>

The obtained polymethyl methacrylate was molded to a thickness of 21 µm to 28 µm by vacuum heat pressing so as to obtain a single-layer film.

Various evaluations were performed. The results are shown in Table 3.

### (Comparative Example 3)

### <Production of hydrogenated copolymer>

A hydrogenated phenylacetylene/dicyclopentadiene copolymer was obtained from dicyclopentadiene and phenylacetylene in accordance with a method described in Example 1 of JP2006-183001A. According to ¹H-NMR measurement, the ratio of dicyclopentadiene-derived repeating units and phenylacetylene-derived repeating units in the obtained hydrogenated copolymer was 67:33 (mass ratio). The weight-average molecular weight of the obtained hydrogenated copolymer was 55,000.

Note that the phenylacetylene-derived repeating units were hydrogenated and thus had the same structure as repeating units of vinyl-addition polymerized styrene.

### <Formation of film>

The obtained hydrogenated copolymer was molded to a thickness of 21 µm to 28 µm by vacuum heat pressing so as to obtain a single-layer film.

Various evaluations were performed. The results are shown in Table 3.

### (Comparative Example 4)

### <Production of ring-opened polymer>

A glass reactor equipped with a stirrer was charged with 0.31 mg of bis(tricyclohexylphosphine)benzylidene ruthenium dichloride and 5 mL of toluene and was then stirred. Next, a solution of 1.75 g of dicyclopentadiene and 0.0032 g of 1-hexene dissolved in 3.0 g of toluene was added and stirred, and a polymerization reaction was initiated. The reaction was performed at room temperature for 3 hours. Thereafter, a large amount of methanol was poured into the polymerization reaction liquid so as to cause coagulation of precipitate, and then the coagulated material was filtered off. The filtration residue was washed with methanol and was subsequently dried under reduced pressure at 40°C for 24 hours. The yield of the obtained polymer was 1.74 g. The weight-average molecular weight of the obtained polymer was 30,000. According to ¹H-NMR measurement, the obtained polymer was formed of only repeating units of ring-opened dicyclopentadiene.

### <Hydrogenation>

Next, 0.1 g of the obtained polymer and 0.8 g of p-toluenesulfonyl hydrazide were added into a glass reactor equipped with a stirrer. In addition, 30 mL of p-xylene was added, and a hydrogenation reaction was performed at 125°C for 5 hours. This hydrogenation reaction liquid was poured into a large amount of methanol so as to cause complete precipitation of a produced hydrogenated polymer, which was then filtered off and washed, and was subsequently dried under reduced pressure at 40°C for 24 hours. The obtained hydrogenated polymer had a percentage hydrogenation of 99% or more, and, according to ¹H-NMR measurement, was formed of only repeating units (dicyclopentadiene-derived repeating units) resulting from hydrogenation of ring-opened dicyclopentadiene repeating units. Note that the weight-average molecular weight of the hydrogenated polymer was not measured due to the solubility thereof and was assumed to be the same as that of the non-hydrogenated polymer.

### <Formation of film>

The obtained hydrogenated polymer was molded to a thickness of 21 µm to 28 µm by vacuum heat pressing so as to obtain a single-layer film.

Various evaluations were performed. The results are shown in Table 3.

**[Table 1]**

| | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|---|---|---|---|
| Polymer | Chemical composition | Norbomene-derived repeating units [mass%] | 60 | 60 | 32 | 32 | 60 | 60 | 42 | 55 | 55 | 39 | 39 | - | - | - | 65 | 61 | 37 |
| | | Dicyclopentadiene-derived repeating units [mass%] | - | - | - | - | - | - | - | - | - | - | - | 45 | 45 | 34 | 6 | - | 4 |
| | | Tetracyclododecene-derived repeating units [mass%] | - | - | - | - | - | - | - | - | - | - | - | - | - | - | - | 4 | - |
| | | Methyl methacrylate-derived repeating units [mass%] | 40 | 40 | 68 | 68 | - | - | - | - | - | - | - | 55 | 55 | - | 29 | - | - |
| | | Butyl acrylate-derived repeating unis [mass%] | - | - | - | - | 40 | 40 | 58 | - | - | - | - | - | - | 66 | - | 35 | - |
| | | Acrylonitrile-derived repeating units [mass%] | - | - | - | - | - | - | - | 45 | 45 | 61 | 61 | - | - | - | - | - | 59 |
| | | Phenylacetylene-derived repeating units [mass%] | - | - | - | - | - | - | - | - | - | - | - | - | - | - | - | - | - |
| | Percentage hydrogenation [mol%] | | ≥ 99 | ≥ 99 | ≥ 99 | ≥ 99 | ≥ 99 | ≥ 99 | ≥ 99 | ≥ 99 | ≥ 99 | ≥ 99 | ≥ 99 | ≥ 99 | ≥ 99 | ≥ 99 | ≥ 99 | ≥ 99 | ≥ 99 |
| | Weight-average molecular weight [-] | | 7400 | 21900 | 21000 | 60400 | 26900 | 82000 | 54100 | 8800 | 26700 | 21500 | 62100 | 5500 | 18400 | 54200 | 27000 | 59000 | 38500 |
| Evaluation | | Water vapor permeability [g/(m²·24 h)] | 0.290 | 0.290 | 0.330 | 0.330 | 0.640 | 0.640 | 0.910 | 0.250 | 0.250 | 0.380 | 0.380 | 0.310 | 0.310 | 0.230 | 0.290 | 0.280 | 0.390 |
| | | Oxygen permeability [cm³/(m²·24 h·atm)] | 240 | 240 | 240 | 240 | 400 | 400 | 400 | 180 | 180 | 140 | 140 | 800 | 800 | 240 | 300 | 290 | 130 |
| | | Oil resistance | Δ | ○ | ○ | ○ | ○ | ○ | ○ | Δ | ○ | ○ | ○ | ○ | ○ | ○ | ○ | ○ | ○ |
| | | Close adherence to PVOH film | ○ | ○ | ○ | ○ | ○ | ○ | ○ | ○ | ○ | ○ | ○ | ○ | ○ | ○ | ○ | ○ | ○ |

| | | | Example 18 | Example 19 | Example 20 | Example 21 | Example 22 |
|---|---|---|---|---|---|---|---|
| Polymer | Chemical composition | Norbomene-derived repeating units [mass%] | 82 | 95 | 89 | 66 | 93 |
| | | Dicyclopentadiene-derived repeating units [mass%] | - | - | - | - | - |
| | | Tetracyclododecene-derived repeating units [mass%] | - | - | - | - | - |
| | | Methyl methacrylate-derived repeating units [mass%] | 18 | 5 | 11 | - | - |
| | | Butyl acrylate-derived repeating units [mass%] | - | - | - | 34 | 7 |
| | | Acrylonitrile-derived repeating units [mass%] | - | - | - | - | - |
| | | Phenylacetylene-derived repeating units [mass%] | - | - | - | - | - |
| | Percentage hydrogenation [mol%] | | > 99 | > 99 | > 99 | > 99 | > 99 |
| | Weight-average molecular weight [-] | | 6400 | 4600 | 7200 | 3400 | 5000 |
| Evaluation | | Water vapor permeability [g/(m²·24 h)] | 0.28 | 0.26 | 0.27 | 0.69 | 0.27 |
| | | Oxygen permeability [cm³/(m²·24 h·atm)] | 220 | 210 | 220 | 450 | 210 |
| | | Oil resistance | Δ | Δ | Δ | Δ | Δ |
| | | Close adherence to PVOH film | ○ | ○ | ○ | ○ | ○ |

| | | | Comparative Example 1 | Comparative Example 2 | Comparative Example 3 | Comparative Example 4 |
|---|---|---|---|---|---|---|
| Polymer | Chemical composition | Norbornene-derived repeating units [mass%] | 100 | - | - | - |
| | | Dicyclopentadiene-derived repeating units [mass%] | - | - | 67 | 100 |
| | | Tetracyclododecene-derived repeating units [mass%] | - | - | - | - |
| | | Methyl methacrylate-derived repeating units [mass%] | - | 100 | - | - |
| | | Butyl acrylate-derived repeating units [mass%] | - | - | - | - |
| | | Acrylonitrile-derived repeating units [mass%] | - | - | - | - |
| | | Phenylacetylene-derived repeating units [mass%] | - | - | 33 | - |
| | Percentage hydrogenation [mol%] | | > 99 | - | ≥ 99 | > 99 |
| | Weight-average molecular weight [-] | | 95000 | 61000 | 55000 | 30000 |
| Evaluation | | Water vapor permeability [g/(m²·24 h)] | 0.230 | > 100 | 0.500 | 0.230 |
| | | Oxygen permeability [cm³/(m²·24 h·atm)] | 240 | > 2000 | 400 | 400 |
| | | Oil resistance | × | O | × | × |
| | | Close adherence to PVOH film | × | O | × | × |

It can be seen from Tables 1 and 2 that films having high water vapor barrier performance, oxygen barrier performance, oil resistance, and close adherence to a PVOH film are obtained in Examples 1 to 22. Moreover, it can be seen from Table 3 that oil resistance and close adherence to a PVOH film decrease for films of Comparative Examples 1, 3, and 4 and that water vapor barrier performance and oxygen barrier performance decrease for the film of Comparative Example 2.

### INDUSTRIAL APPLICABILITY

According to the present disclosure, it is possible to provide a random copolymer that is capable of forming a film having high water vapor barrier performance, oxygen barrier performance, oil resistance, and close adherence to a PVOH film.

## Claims

1. A random copolymer comprising:
a repeating unit represented by formula (I), shown below, 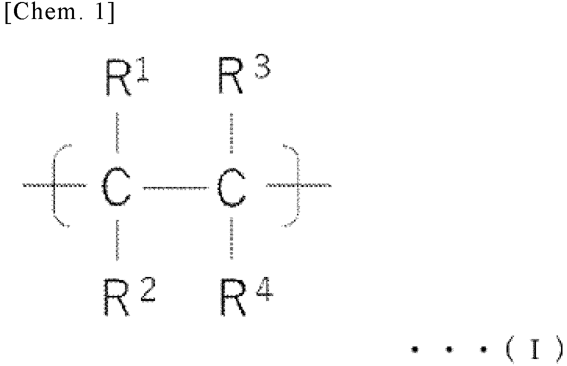 where, in formula (I), R¹ to R⁴ each represent, independently of one another, a hydrogen atom, a halogen atom, or an organic group with a proviso that a case in which any one of R¹ to R⁴ is a phenyl group and the rest of R¹ to R⁴ are hydrogen atoms is excluded; and
a repeating unit represented by formula (II), shown below, 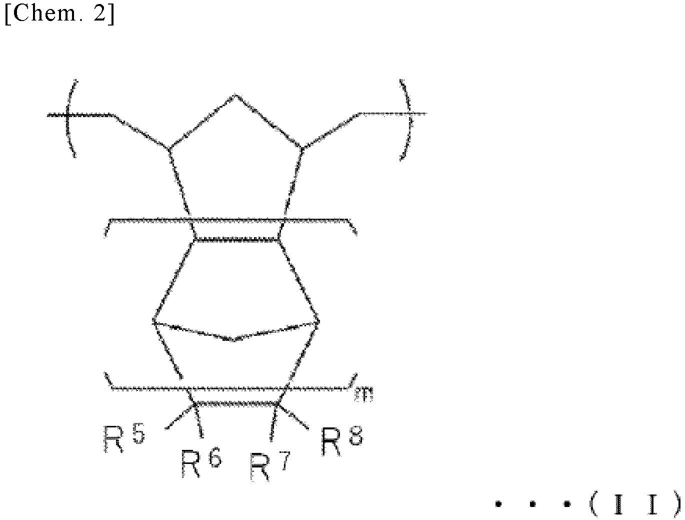 where, in formula (II), R⁵ to R⁸ each represent, independently of one another, a hydrogen atom, a hydrocarbon group having a carbon number of not less than 1 and not more than 20, or a group including one or more atoms selected from the group consisting of a halogen atom, a silicon atom, an oxygen atom, and a nitrogen atom, R⁵ to R⁸ may be bonded to one another to form a ring, and m is an integer of 0 to 2.

2. The random copolymer according to claim 1, wherein R¹ and R² are hydrogen atoms, R³ is a hydrogen atom or a methyl group, and R⁴ is a group having a carbon number of not less than 1 and not more than 12 that may include one or more atoms selected from the group consisting of a halogen atom, an oxygen atom, and a nitrogen atom.

3. The random copolymer according to claim 2, wherein R⁴ is a group having a carbon number of not less than 1 and not more than 12 that includes either or both of an oxygen atom and a nitrogen atom.

4. The random copolymer according to claim 3, wherein R⁴ is a group having a carbon number of not less than 1 and not more than 12 that includes a carbonyl group or a nitrile group.

5. The random copolymer according to any one of claims 1 to 4, wherein R⁵ to R⁸ are each, independently of one another, a hydrogen atom or a hydrocarbon group having a carbon number of not less than 1 and not more than 20.

6. A method of producing a random copolymer comprising:
(A) ring-opening polymerizing a monomer composition containing a compound represented by formula (III), shown below, 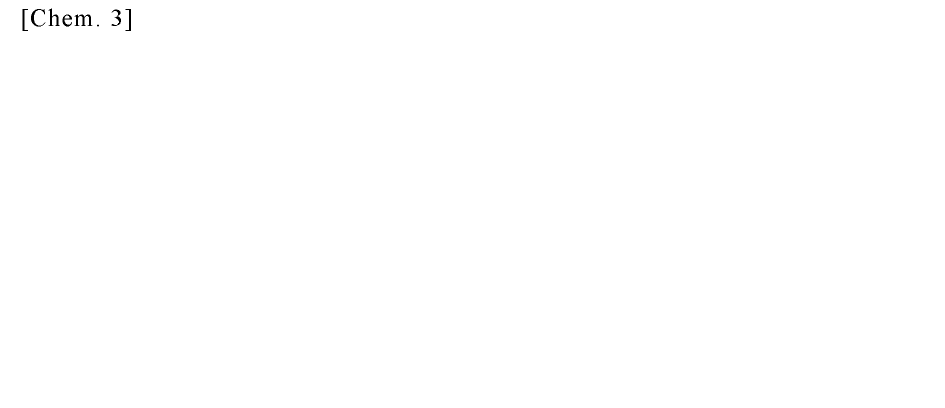 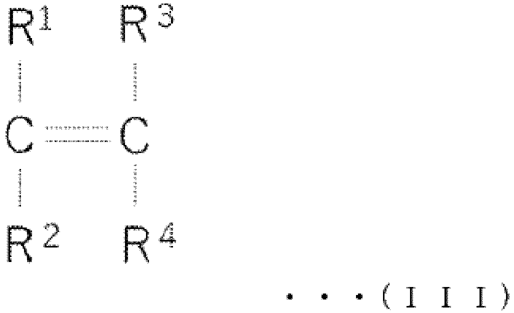 where, in formula (III), R¹ to R⁴ each represent, independently of one another, a hydrogen atom, a halogen atom, or an organic group with a proviso that a case in which any one of R¹ to R⁴ is a phenyl group and the rest of R¹ to R⁴ are hydrogen atoms is excluded, and a compound represented by formula (IV), shown below, 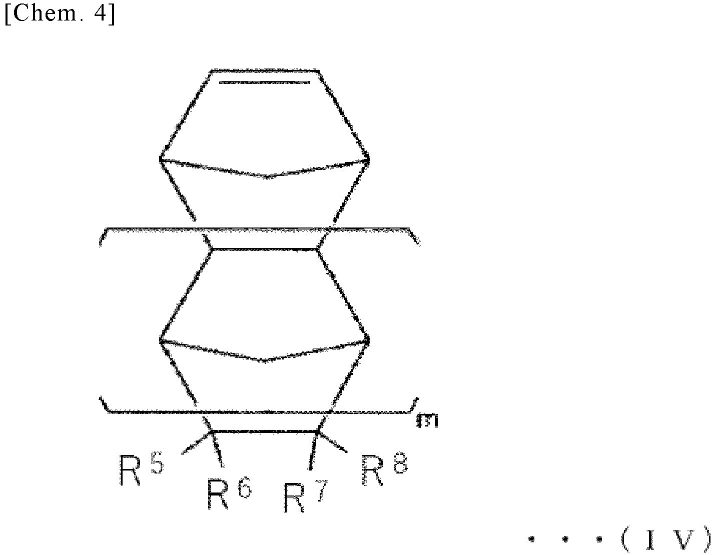 where, in formula (IV), R⁵ to R⁸ each represent, independently of one another, a hydrogen atom, a hydrocarbon group having a carbon number of not less than 1 and not more than 20, or a group including one or more atoms selected from the group consisting of a halogen atom, a silicon atom, an oxygen atom, and a nitrogen atom, R⁵ to R⁸ may be bonded to one another to form a ring, and m is an integer of 0 to 2, in the presence of a catalyst and an ether compound represented by formula (V), shown below, 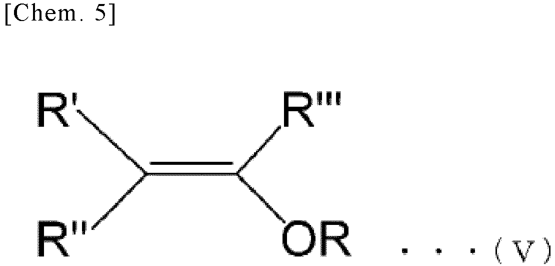 where, in formula (V), R to R‴ each represent, independently of one another, a group having a carbon number of not less than 1 and not more than 12 that may include one or more atoms selected from the group consisting of a halogen atom, a silicon atom, an oxygen atom, and a nitrogen atom and R to R‴ may be bonded to one another to form a ring; and
(B) hydrogenating a polymer that is obtained by the (A) ring-opening polymerizing.

7. The method of producing a random copolymer according to claim 6, wherein the ether compound includes two or more ether bonds in a molecule.

8. The method of producing a random copolymer according to claim 6 or 7, wherein the ether compound is 1-cyclohexenyl-2-methoxyethene, ethyl-1-propenyl ether, 3,4-dihydropyran, 2-vinyloxytetrahydropyran, 3-ethoxyacrylonitrile, 3,4-dihydro-2-methoxy-2H-pyran, or 3,4-dihydro-2-ethoxy-2H-pyran.

9. The method of producing a random copolymer according to any one of claims 6 to 8, wherein R¹ and R² are hydrogen atoms, R³ is a hydrogen atom or a methyl group, and R⁴ is a group having a carbon number of not less than 1 and not more than 12 that may include one or more atoms selected from the group consisting of a halogen atom, an oxygen atom, and a nitrogen atom.

10. The method of producing a random copolymer according to claim 9, wherein R⁴ is a group having a carbon number of not less than 1 and not more than 12 that includes either or both of an oxygen atom and a nitrogen atom.

11. The method of producing a random copolymer according to claim 10, wherein R⁴ is a group having a carbon number of not less than 1 and not more than 12 that includes a carbonyl group or a nitrile group.

12. The method of producing a random copolymer according to any one of claims 6 to 11, wherein R⁵ to R⁸ are each, independently of one another, a hydrogen atom or a hydrocarbon group having a carbon number of not less than 1 and not more than 20.
